Europäisches Patentamt

European Patent Office

Office européen des brevets

(11) Veröffentlichungsnummer: **0 192 054 B1**

(12) **EUROPÄISCHE PATENTSCHRIFT**

(45) Veröffentlichungstag der Patentschrift: **11.09.91**

(51) Int. Cl.⁵: **B29C 67/22**

(21) Anmeldenummer: **86100627.8**

(22) Anmeldetag: **18.01.86**

(54) **Verfahren zum Schäumen und Sintern von Kunststoffen.**

(30) Priorität: **23.01.85 DE 3502006**

(43) Veröffentlichungstag der Anmeldung:
**27.08.86 Patentblatt 86/35**

(45) Bekanntmachung des Hinweises auf die
Patenterteilung:
**11.09.91 Patentblatt 91/37**

(84) Benannte Vertragsstaaten:
**AT CH DE FR GB IT LI NL**

(56) Entgegenhaltungen:
**DE-A- 3 243 632**

**PATENT ABSTRACTS OF JAPAN, Band 7, Nr.
29 (M-191)[1174], 5. Februar 1983; & JP-A-57
182 411 (HITACHI SEISAKUSHO K.K.)
10-11-1982**

(73) Patentinhaber: **Hahn, Ortwin, Prof. Dr.-Ing.
Hüfferweg 9
W-4790 Paderborn(DE)**

(72) Erfinder: **Hahn, Ortwin, Prof. Dr.-Ing.
Hüfferweg 9
W-4790 Paderborn(DE)**
Erfinder: **Tiba, Mohamed-Hussein, Dipl.-Ing.
Schwerinstrasse 64
W-4000 Düsseldorf(DE)**

(74) Vertreter: **Hanewinkel, Lorenz, Dipl.-Phys. et
al
Patentanwalt Ferrariweg 17a
W-4790 Paderborn(DE)**

## Beschreibung

Die Erfindung betrifft ein Verfahren bei dem schäumbarer Kunststoff in einem Vorschäumer durch gesteuerte Wärmezufuhr vorgeschäumt wird, so daß dessen Dichte oder Perlgröße verringert bzw. vergrößert wird, und bei dem er danach zur Trocknung, Luftaufnahme und Treibgasabgabe bei vorgegebener Temperatur und Luftfeuchtigkeit für einen bestimmten Zeitraum zwischengelagert wird und dann in einzelnen Arbeitszyklen in eine Sinterkammer, diese jeweils füllend, injiziert wird, in welcher ihm in einer Heizphase Wärme und Prozeßdampf zugeführt werden wobei drucksignalabhängig das Ende der Zuführung des Prozeßdampfes und das Ende der Heizphase und damit der Beginn einer Kühlphase bestimmt wird und druck- und temperaturabhängig das Ende der Kühlphase und der Entformungszeitpunkt des Sinterkörpers bestimmt werden.

Aus DE-A-32 43 632 ist es bekannt, eine Steuerung der Betriebszustände eines Schäum- und Sinterverfahrens abhängig von der Auswertung von Sinterdruckmeßsignalen vorzunehmen, wobei die Druckmeßsignale jeweils in Verbindung mit zuvor bestimmten Materialdaten des Schäumgutes wie der Dichte, der Perlgröße, dem Treibgasgehalt und dem Feuchtigkeitsgehalt zur Vorgabe der Zeitpunkte der Beendigung der Zuführung von Prozeßdampf, der Beendigung der Heizphase oder der Entformung dienten, indem aus den Materialdaten jeweils bestimmte Druckvergleichswerte bestimmt wurden, bei deren Erreichen die jeweiligen Zeitpunkte gegeben waren. Diese genannten Bestimmungen der Materialdaten sind relativ aufwendig und außerdem ungenau, da der Feuchtigkeits-, Luft- und Treibgasgehalt bei längerer Zwischenlagerung des vorgeschäumten Kunststoffes zeitlich veränderlich sind. Weiterhin sind die Zusammenhänge der verschiedenen Einflußgrößen zur Bestimmung der vorzugebenden Druckwerte, bei denen Steuerfunktionen auszulösen sind, empirische Funktionen, deren Ermittlung für verschieden geformte Sinterkammern aufwendig ist.

Es ist Aufgabe der Erfindung, ein Verfahren zu offenbaren, das unabhängig von der vorherigen Kenntnis über den Zustand, die Materialdaten oder die Vorgeschichte des Schäumgutes, das der Sinterkammer zugeführt wird, eine temperatur- und/oder drucksignalabhängige Steuerung des Sinterprozesses in einfacher Weise ermöglicht, so daß mit relativ geringem Energie- und Zeitaufwand Sinterkörper vorgegebener Qualität entstehen.

Die Lösung der Aufgabe besteht darin, daß während der Heizphase aus dem Druck- und/oder Temperaturverlauf in der Sinterkammer jeweils der Erweichungszeitpunkt des Kunststoffes bestimmt wird und von diesem Erweichungszeitpunkt aus jeweils das Ende der Heizphase und der Prozeßdampfzuführung sowie des Beginns der Kühlphase bestimmt wird und daß aus der Sintertemperatur, die zum Erweichungszeitpunkt herrscht, und/oder dem Sinterdruck der zum Erweichungszeitpunkt herrscht, der Entformungszeitpunkt oder vorzugsweise ein maximaler Entformungsdruck und eine maximale Enformungstemperatur bestimmt werden, und das Entformen dann geschieht, wenn die genannten Maximalwerte erreicht bzw. unterschritten sind.

Eine vorteilhafte Ausgestaltung ist dadurch gegeben, daß der Erweichungszeitpunkt aus der Veränderung der Temperatur oder der Druckanstiegsgeschwindigkeit ermittelt wird. Die Druckanstiegsgeschwindigkeit verlangsamt sich ab dem Zeitpunkt der Erweichung erheblich. Der Temperaturanstieg der Formwand zeigt einen kurzzeitigen, einen Bruchteil einer Sekunde anhaltenden, Stillstand oder sogar einen geringen Abfall, z.B. um 1 gradC, wenn der erweichte Sinterkuchen sich vollflächig an die Wand anlegt und der Wärmeübergang sich dadurch verbessert.

Anschließend steigt die Temperatur wieder schneller als vorher an. Auch im Kondensat des Dampfes, das die Sinterkammer an einem Entsorgungsanschluß verläßt, kann ein zur Auswertung geeigneter Temperaturverlauf gemessen werden, und aus dem Beginn eines steilen zeitlichen Anstieges der Temperatur der Erweichungszeitpunkt ermittelt werden.

In der einfachsten Ausführung einer Vorrichtung zur durchführung des Verfahrens ist nur ein Temperaturfühler vorhanden, und von dem damit bestimmten Erweichungszeitpunkt aus erfolgen die Bestimmungen der Beendigung der Heizphase, der Prozeßdampfzuführung und des Entformungszeitpunktes. Bereits hierdurch tritt eine Verbesserung der Verfahrensökonomie ein, insbes. wenn die Qualitätsanforderung an das Produkt beschränkt ist. Toleranzen, die in den ersten Teilprozessen des Vorschäumens, Trocknens und Zwischenlagerns auftreten, werden in ihren Auswirkungen auf diese Weise ohne Zeitverlust ausgeglichen; die Zeit des Sinterns im erweichten Zustand ist immer definiert.

Weitere vorteilhafte Ausgestaltungen des Verfahrens sind in den Unteransprüche angegeben.

Die Vereinfachung der Steuerung gegenüber der vorbekannten führt außerdem zu einer vorteilhaft vereinfachten Gesamtregelung des Vorschäum- des Zwischenlager- und des Sinter-Teilprozesses der auch Fertigschäum-Teilprozeß genannt wird. Die Gesamterfahrens-Regelung beruht auf der Erkenntnis, daß die Teilprozessverläufe durch den Feuchtigkeits-, Luft- und Treibgasgehalt des Schäumgutes im wesentlichen bestimmt sind, und daß zur Zeit des beginnenden Sinterns über eine Analyse des Sinterdruckverlaufs der Feuchtigkeits-, Luft- und Treibgasgehalt relativ oder absolut bestimmt werden kann. Diese unmittelbar gewonnenen Materialdaten dienen vorteilhaft einerseits zur Steuerung der Vorschäum- und Zwischenlager-Teilprozesse, wodurch eine Übergabe von Material weitgehend konstanter Eigenschaften zwischen den Teilprozessen stattfindet, und andererseits dienen die beim Sintern gewonnenen Daten zur Steuerung des Sinterprozeßablaufes wie beschrieben. Drittens wird aus der genannten indirekten Treibgasgehaltbestimmung über den bekannten Zusammenhang des Treibgasgehalts mit der Glastemperatur des Kunststoffes die jeweils maximal zulässige Entformungstemperatur bestimmt, die neben dem maximalen Entformungsdruck als Bedingung zu beachten ist. Die Sinterzeit, während der dem erweichten Sinterkuchen Wärme und Prozeßdampf in der sogenannten Autoklavbedampfung weiterhin zugeführt wird, und die Entformungsbedingungen sind dabei abhängig von der geforderten Qualität der Druck- und/oder Stoßfestigkeit, der Oberflächenbeschaffenheit und der Formgenauigkeit des Formlings.

Soweit das Abkühlungsverhalten einer bestimmten Sintervorrichtung bekannt ist, kann anstatt einer Entformungstemperatur auch eine Entformungszeit aus dem ermittelten Sinterdruck bzw. seiner anfänglichen Zunahmegeschwindigkeit jeweils bestimmt werden, nach der die Entformung vorgenommen wird.

Die Analyse des Druck- und Temperaturverlaufes zur Gewinnung der Materialdaten bzw. Prozeßsteuerdaten basiert auf folgenden Zusammenhängen: Das Rohmaterial hat einen Treibmittelgehalt von z.B. 8 Gewichtsprozenten, und das Treibmittel liegt in zum größten Teil flüssiger Form vor. Bei dem Vorschäumteilprozeß verdampft durch Wärmezufuhr das Treibgas und bläht die Kunststoffperlen bei Erreichen der Erweichungstemperatur, z.B. bei 90 gradC, auf und verläßt diese dabei, soweit ein hoher Überdruck vorhanden ist, so daß nach dem Vorschäumen etwa 4 bis 6 Prozent Treibgasgehalt noch verbleibt.

Bei dem Zwischenlager-Teilprozeß wird durch Trockenluftzufuhr bei einer Temperatur unter der Erweichungstemperatur, d.h. unter 60 gradC, dem Schäumgut die Feuchtigkeit entzogen, die von dem Kondensat des Dampfes, der zur Wärmezufuhr im Vorschäumprozeß diente, herrührt. Weiterhin diffundiert je nach Temperatur und Zeitdauer der Zwischenlagerung dabei ein weiterer Teil des Treibgases aus den Perlen und wird durch eindiffundierende Luft ersetzt. Diese drei dadurch gegebenen Größen: Feuchtigkeit, Treibgasgehalt und Luftgehalt des vorgeschäumten und zwischengelagerten Materials haben nun unterschiedliche Aufwirkungen auf den Sinter-Teilprozeß.

Die Feuchtigkeit führt zu einem zusätzlichen Wärmebedarf beim Aufheizen des Sintergutes. Aus dem Verhältnis der spezifischen Wärme des Kunststoffes und des Wassers ergibt sich, daß bei 20 Prozent Feuchtigkeitsgehalt etwa die doppelte Wärmemenge zum Aufheizen des Sintergutes benötigt wird, d.h., daß auch die doppelte Prozeßdampfmenge bis zum Erweichen zuzuführen ist. Wenn nach einer Vorschäumung mit Dampf keine Trocknung vorgenommen würde, wären etwa 20 Prozent Kondensatfeuchtigkeit wegen des Wäremäquivalents im Schäumgut enthalten.

Ist nun bei einer gegebenen Sintervorrichtung bei Sinterung von trockenem Schäumgut der zeitliche Verlauf des Druckanstieges beim Aufheizen mit Prozeßdampf bekannt, so zeigt ein verlangsamter Druckanstieg in einem späteren Sinterzyklus, der einer Verlangsamung des Temperaturanstieges im Sintermaterial entspricht, einen erhöhten Feuchtigkeitsgehalt an. Allerdings ist der zeitliche Druckanstieg auch durch weitere Materialdaten, nämlich die Materialdichte und den Treibgasgehalt beeinflußt, wie noch gezeigt wird.

Ein Material, das geringer als vorgegeben vorgeschäumt ist, d.h. eine höhere Rohdichte jedoch mehr verbleibendes Treibmittel besitzt, benötigt beim Sintern zwar eine entsprechend höhere Wärmemenge zum Aufheizen, jedoch führt der höhere Treibmittelgehalt zu einem schnelleren Druckanstieg. Beide den Druckanstieg verringernde Ursachen, nämlich höhere Feuchtigkeit bzw. Rohdichte lassen sich unterscheiden, weil der Sinterdruckverlauf, bei dem dichten Material bis zu einem höheren Druckwert steigt, bevor die Anstiegsgeschwindigkeit merklich nachläßt. Auf diese Weise wird eine Differenzierung vorgenommen und eine entsprechende ausgleichende Regelung der vorgelagerten Teilprozesse ermöglicht und ausgeführt.

Grundsätzlich führt ein erhöhter Treibgasgehalt zu einer Absenkung der Erweichungstemperatur des Kunststoffes. Wird das Sintergut bedampft bzw. erwärmt, so tritt eine Drucksteigerung in den Perlen auf, die sich elastisch über die Perlwände auf die Fromwand des Sinterwerkzeuges überträgt und dort als Sinterdruck gemessen wird. Sobald beim Aufheizen die Erweichungstemperatur erreicht ist, dehnen sich die Perlen in das Zwickelvolumen aus, wodurch sich der Druckaufbau verlangsamt. Aus der Höhe der Temperatur, bei der die Verlangsamung auftritt, oder indirekt auch aus dem zugehörigen Druckmeßwert, sofern die Schüttdichte einem vorbestimmten Wert entspricht, läßt sich somit der Treibgasgehalt bestimmen, wobei eine niedrige Temperatur einem hohen Treibgasgehalt entspricht und umgekehrt. Der Sinterdruck, bei dem die Erweichung eintritt, ist bei einem mittleren Treibgasgehalt am höchsten, wie noch in der Beschreibung der Prozeßbeispiele gezeigt wird.

Im engen Zusammenhang mit dem Treibgasgehalt steht auch der Luftgehalt des Schäumgutes, da, vorausgesetzt die Zwischenlagerzeit war ausreichend, das entweichende Treibgas durch Luft ersetzt wird. Befindet sich das Schäumgut beim Zwischenlagern auf einer Temperatur unter der Siedetemperatur des Treibgases; diese beträgt bei einem Druck von 1 bar 36 gradC für n-Pentan; so füllen sich die Innenräume der Perlen fast gänzlich mit Luft, und das Treibgas liegt nahezu vollständig kondensiert vor. Beim Erwärmen im Sinterwerkzeug verdampft dann das Treibgas gemäß seiner Sättigungsdampfdruck-Kurve, so daß spätestens bei 60 gradC und bei 2 bar Innendruck das Flüssiggas völlig verdampft ist und in den Perlen nur ein Luft-Pentan-Gasgemisch vorhanden ist, dessen Druck bei konstantem Volumen, d.h. solange keine Erweichung des Kunststoffes auftritt, dann nur noch proportional zur absoluten Temperatur weiter zunimmt.

Findet eine Zwischenlagerung jedoch bei erhöhter Temperatur, z.B. bei 60 gradC, statt, so ist davon auszugehen, daß nach einer gewissen Zeit durch die Diffussion etwa 1 bar Pentangas-Innendurck herrscht und sich zunächst kaum Luft in den Perlen befindet. Nach weiterer Zwischenlagerzeit wird dann das Pentangas nach und nach durch Luft ersetzt. Da dser Innendruck und der Pentangehalt somit bei gleichen Umgebungsbedingungen sehr unterschiedlich sein können, wirkt sich dies wiederum auf den Aufbau des Sinterdrucks, der indirekt von dem Innendurck bestimmt wird, aus. Die Auswertung des Druckverlaufs zur Steuerung des Schäum- oder des Zwischenlager-Teilprozesses ist deshalb nur sinnvoll, wenn bei diesen nicht alle Einflußgrößen wie Temperatur, Zeit, Durchlüftungsgeschwindigkeit usw. völlig unbestimmt sind. Liegen einige der Größen aus praktischen Gegebenheiten fest, so können mindestens drei Einflußgrößen mittels der im folgenden genannten Steuergrößen weitgehend unabhängig geregelt werden, und zwar sind dies:

1. eine erste Steuergröße, nämlich die Abweichung der Druckanstiegsgeschwindigkeit beim Beginn des Sinterns von einer vorgegebenen Geschwindigkeit,

2. eine zweite Steuergröße, nämlich die Abweichung des erreichten Sinterdrucks zum Erweichungszeitpunkt von einem vorgegebenen Wert und

3. eine dritte Steuergröße, nämlich die Abweichung der Sintertemperatur zum Erweichungszeitpunkt von einem vorgegebenen Wert.

Als zweckmäßig hat sich ergeben, daß die erste Regelgröße zur Korrektur des Trocknungsvorganges der Trocknungs-Vorrichtung in dem Sinne zugeführt wird, daß bei langsamerem Druckanstieg eine stärkere oder längere Trocknung bewirkt wird, und daß die zweite Regelgröße zur Korrektur des Vorschäumens in dem Sinne zugeführt wird, daß bei höherem Sinterdruck das Vorschäumen intensiviert, d.h. z.B. verlängert wird, so daß die Dichte des Vorschaumes verringert wird, und daß die dritte Regelgröße die Zwischenlagertemperatur oder -zeit erhöht bzw. verlängert, wenn die Sintertremperatur erniedrigt ist, und daß jeweils bei umgekehrten Abweichungen umgekehrt gesteuert wird. Somit wird das zum Sintern in das Werkzeug injizierte Material weitgehend in seinen drei wesentlichen Materialgrößen normiert.

Der Sinterprozeß selbst wird über die geregelten Materialgrößen hinaus noch im wesentlichen durch den Treibmittel- oder Pentangehalt bestimmt, und dieser bestimmt, wie beschrieben, den Erweichungspunkt und damit den Zeitpunkt der Verringerung der Druckanstiegsgeschwindigkeit oder der Erhöhung der Tempraturanstiegsgeschwindigkeit beim Zuführen des Sinterprozeßdampfes. Dieser Erweichungszeitpunkt läßt sich relativ genau bestimmen, indem geprüft wird, wann diese Druckanstiegsgeschwindigkeit gegenüber der anfänglich gemessenen auf einen bestimmten Bruchteil, z.B. 25 Prozent, gefallen ist bzw. wann die Tempraturanstiegsgeschwindigkeit um einen bestimmten Prozentsatz gegenüber der anfänglichen kurzzeitig abnimmt. Die Bestimmung des Erweichungszeitpunktes ist dadurch jeweils unabhängig von allen anderen Betriebsparametern und Konstruktionsmerkmalen der Sintervorrichtung. Der eigentliche Sintervorgang beginnt mit der Erweichung des Kunststoffes, so daß wie durch Experimente bestätigt, dieser Vorgang nach Beginn der Erweichung und weiterer Prozeßdampfzufuhr über eine je nach Qualitätsanforderung vorgegebene Haltezeit, nach z.B. 4, 6 oder 8 sec, abgeschlossen ist. Weiteres Sintern führt unter Umständen zu Überhitzung und Verformung des Sinterkörpers.

Es zeigt sich daß dadurch auf einfachste Weise eine Steuerung des Sintervorganges möglich ist, und dieses Verfahren, da die Steuerung von der ermittelten Erweichung selbst ausgehend erfolgt, der vorbekannten Steuerung überdies überlegen ist, bei der lediglich mittels eines laufenden Vergleichs des Sinterdruckes mit einem jeweils bestimmten Vorgabewert der Anfang der Sinterzeit fiktiv festgelegt wurde.

Die Sinterzeit selbst ist somit ausgehend von dem tatsächlichen Erweichungszeitpunkt auf das notwendige Maß beschränkt, und Prozeßzeit und -energie werden im allgemeinen gegen das bekannte Verfahren unmittelbar eingespart. Eine weitere Prozeßzeit- und Energieersparnis liegt darin, daß keine unnötige Heizung der Form und des Formlings über die notwendige Sintertemperatur auftritt und somit auch eine schnelle Abkühlung bis zum Entformen möglich wird.

Aus dem zum Erweichungszeitpunkt ermittelten Sinterdruck oder besser der Sintertemperatur läßt sich weiterhin sehr genau der maximale Entformungsdruck bzw. die maximale Entformungstemperatur, unterhalb derer eine weitgehend nachverformungsfreie Ausstoßung des Formlings möglich ist, bestimmen, da der Treibmittelgehalt hierfür über seinen bekannten Zusammenhang mit der Glastemperatur des Kunststoffes maßgeblich ist und dieser, wie beschrieben, aus der Steilheit des Druckverlaufs bzw. der Erweichungstemperatur, bestimmt wird. Liegt der Pentangehalt relativ hoch, so ist die Erweichungstemperatur und auch der Sinterdruck niedrig, und dementsprechend wird die Entformungstemperatur relativ niedrig vorgegeben. Außerdem ist bei hohem Pentangehalt der Innendruck in den Perlen relativ hoch, so daß dadurch eine erhöhte Gefahr des Nachblähens nach der Entformung besteht, weshalb in diesem Fall ein relativ niedriger Entformungsdruck vorgegeben wird. Je niedriger der Sinterdruck und die Sintertemperatur ist, um so niedriger wird somit auch der Entformungsdruck gewählt.

Bei mittlerem Pentangehalt ist die Sintertemperatur zum Erweichungszeitpunkt zwar etwas erniedrigt, der Sinterdruck aber unter bestimmten Bedingungen am höchsten, so daß dabei eine mittlere Entformungstemperatur und ein mittlerer Entformungsdruck festzulegen sind. Bei sehr geringem Pentangehalt und entsprechender Luftfüllung der Perlen ist die Sintertemperatur am höchsten, und der Sinterdruck bleibt zum Erweichungszeitpunkt unter einem maximalen Sinterdruck, der bei mittleren Pentangehalt entsprechend auftreten würde, so daß bei geringem Pentangehalt eine relativ hohe maximale Entformungstemperatur und ein mittlerer maximaler Entformungsdruck gewählt werden.

Da die Prozeßzeit, bestehend aus Heizphase und Kühlphase, möglichst kurz sein sollte und die Differenzen zwischen der Sinter- und Entformungstemperatur bzw. dem Sinter- und Entformungsdruck aus Gründen der Ökonomie möglichst gering sein sollten, ist es zweckmäßig, den Pentangehalt des einzubringenden Sintergutes definiert niedrig zu halten, damit relativ schnell gerade noch eine gute Sinterung bei üblichem Dampfdruck erfolgt und bei der folgenden Kühlung der Druckabbau schnell auf den erforderlichen Wert erfolgt.

Es ist vorteilhaft, die Entformungstemperatur so hoch wie möglich zu wählen, da dies einerseits Prozeßzeit und Energie spart aber auch zu trockeneren Formlingen führt und insbes. ein Schwinden oder Zusammenfallen der Teile verhindert, das insbes. bei hohem Treibgas- und bei geringem Luftgehalt der Perlen auftreten kann, da der bei der Sinterung in die Perlen eindiffundierende Wasserdampf unterhalb von 100 gradC kondensiert und das Treibgas beim Sintern z.T. ausdiffundiert, so daß bei relativ schnellem Abkühlen ein Unterdruck in den Innenräumen der Perlen entsteht. Der Temperaturunterschied zwischen der Sintertemperatur und der Entformungstemperatur wird zweckmäßig abhängig von einem zugelassenen Nachbläh- oder Schwindmaß gewählt, wobei eine höhere Teilegenauigkeit, eine höhere Temperaturdifferenz und weiterhin dickere Teile wegen der Nachblähgefahr einen höheren Unterschied erfordern.

Eine weitere vorteilhafte Ausgestaltung des Verfahrens ist es, die minimale Haltezeit des Sinterns jeweils mittels einer vor oder nach der Entformung am Formling vorgenommenen Messung der Druckspannung und deren Vergleich mit einem Sollwert für die folgenden Sinterzyklen zu bestimmen.

Weiterhin wird vorteilhaft mittels einer Stoßreaktionsmessung am Formling ein Dämpfungs- oder Verzögerungsfaktor bestimmt, der z.B. ein Maß für die Eignung von Verpackungsteilen zur Stoßdämpfung ist. Sowohl die Druckspannungs- als auch die Stoßreaktionsmessung wird jeweils entweder bei einer vorgegebenen Teile-Temperatur ausgeführt oder zu der jeweils gemessenen Temperatur über einen ermittelten Zusammenhang korreliert. Die grundsätzlichen Zusammenhänge der Meßgrößen mit der Temperatur werden dazu durch eine Meßfolge an einem Formling ermittelt und als Referenz in der Steuervorrichtung gespeichert. Eine Abweichung des Verzögerungsfaktors, die bei späteren Messungen an einem Formling gegen diese Referenz besteht, wird für die folgenden Zyklen zur Bestimmung des Temperaturunterschiedes zwischen der Sinter- und Entformungs-Tempratur und/oder des Entformungsdruckes in korrigierendem Sinne genutzt. Weiterhin wird, insbes. für Verpackungsteile, dieser Abweichung entsprechend der Sinterdampfdruck und somit auch die Sinterdampftemperatur vorgegeben. Ein höherer Dampfdruck führt zu einer schnelleren Verschweißung der Oberfläche des Sinterkuchens, und dessen Inneres bleibt dadurch locker und wirkt dämpfungserhöhend. Der Energie- und Zeitaufwand wird jedoch dadurch erhöht, so daß der Dampfdruck zweckmäßig nicht höher als nötig bestimmt wird.

Weiterhin wird zweckmäßig am Formling jeweils eine Feuchtigkeitsmessung vorgenommen, deren Meßsignal bei über einem Sollwert erhöht liegender Feuchtigkeit zur Erhöhung des Prozeßdampfdruckes für die nächsten Sinterzyklen ausgewertet wird.

Die Änderungen der bestimmenden Größen für die nächsten Zyklen werden jeweils bei Feststellung einer Abweichung von einem entsprechenden Soll- oder Referenzwert in Inkrementen vorgenommen, so daß eine Optimierung schrittweise erfolgt. Die jeweiligen aufsummierten Inkremente, die den erreichten günstigsten Stand wiedergeben, werden gespeichert und dem jeweils zu fertigenden Produkt und bevorzugt auch der Produktart, der Materialart und der Formteildicke zugeordnet als Anfangswerte für spätere optimale Wiederinbetriebnahme des Prozesses archiviert.

An Hand der Fig. 1 bis 7 werden verschiedene Fälle der Prozeßabläufe und die Zusammenhänge der Meßgrößen, der Prozeßzeiten und der Materialdaten beschrieben.

Fig. 1    zeigt Druck- und Temperaturverläufe von Sintervorgängen von Materialien verschiedener Dichte und für verschiedene Haltezeiten:

Fig. 2    zeigt Druckverläufe bei Sintervorgängen für verschieden feuchte Materialien:

Fig. 3    zeigt Druck- und Temperaturverläufe bei Sintervorgängen für verschieden dicke Formlinge:

Fig. 4    zeigt den Zusammenhang der erreichten Sinterdrücke bei Materialien verschiedener Dichte;

Fig. 5    zeigt den Zusammenhang der Zwischenlagerzeit auf den Sinterdruck, die Sintertemperatur und den Pentangehalt;

Fig. 6    zeigt eine Vorrichtung zur Durchführung des Verfahrens mit einer Steuervorrichtung schematisch;

Fig. 7    zeigt den Zusammenhang der Druckspannung und der Haltezeit für verschieden dichte Materialien.

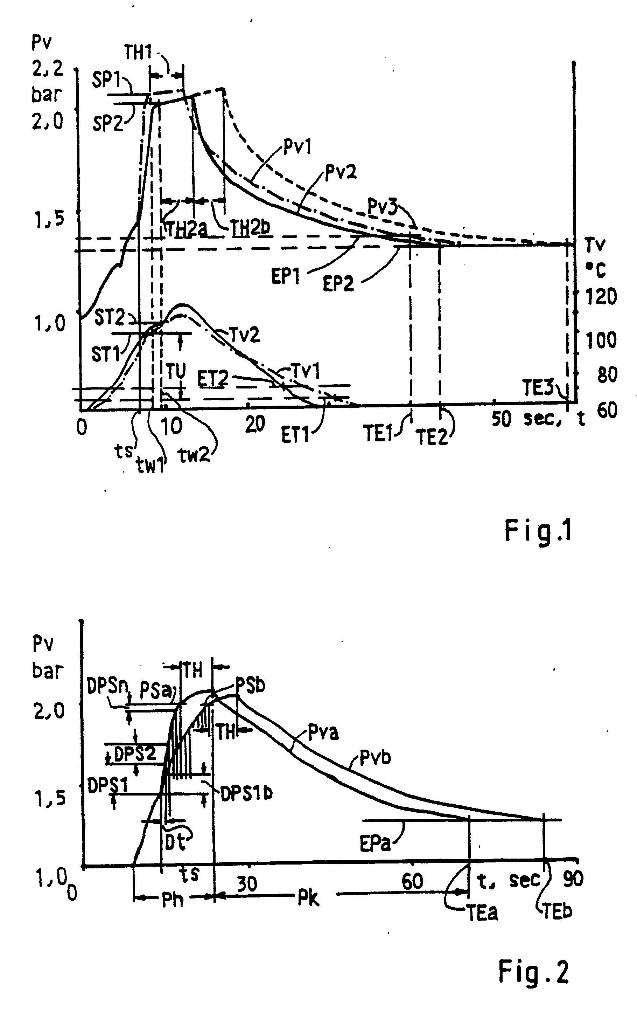

Die verschiedenen Signalverläufe in den Fig. 1 bis 3 sind so gewählt, daß ersichtlich ist, daß unabhängig von den Materialeigenschaften, wie Dichte und Feuchtigkeit, und von der Formeigenschaft, z.B. der Wandstärke des Formlings, der Prozeß durch die gleichartigen charakteristischen Eigenschaften der Signalverläufe gesteuert wird.

In Fig. 1 ist ein Druckverlauf (Pv1) und der zugehörige Temperaturverlauf (Tv1) strichpunktiert gezeichnet. Von der Anfangszeit (0) bis zum Zeitpunkt (ts) findet die Vorheizung der Form und die Entlüftung des Sintergutes und des Forminnenraumes statt, wonach das autoklave Bedampfen mit Prozeßdampf erfolgt. Der Sinterdruck steigt dann relativ schnell an bis bei einem Sinterdruck (SP1) der Anstieg merklich nachläßt. Dies charakterisiert den Erweichungszeitpunkt (tw1). Für eine Haltezeit (TH) wird dann zur Versinterung des Kunststoffes die Heizung und Bedampfung fortgeführt. Danach wird die Form gekühlt, und der Druck fällt bis zu einem vorgegebenen maximalen Entformungsdruck (EP1) ab, durch dessen Erreichen die Entformungzeit (TE1) bestimmt ist.

Der zugehörige Temperaturverlauf (Tv1) zeigt während des Anfangs der Autoklvbedampfung einen bestimmten zeitlichen Anstieg, da das Sintermaterial aufgeheizt werden muß. Sobald die Erweichung des Materials einsetzt, verlangsamt sich der Temperaturanstieg, und i.a. tritt kurzzeitig, da die Temperatur an der Sinterkammerwand gemessen wird, ein Temperaturrückgang um etwa 1 gradC auf, wonach die Temperatur dann steiler als vorher, jedoch mit einer Abflachung zu einer Grenztemperatur hin, ansteigt. Während der Kühlung wird verfahrensgemäß überwacht, wann eine vorgegebene maximale Entformungstemperatur (ET1) erreicht wird. Da dieser Zeitpunkt vor dem Erreichen des maximalen Entformungsdruckes (EP1) liegt, wird die Kühlung noch fortgesetzt, da ansonsten ein zu starkes Nachblähen stattfinden kann.

Die Signalverläufe deren Bezugszeichen die Endziffer 1 haben sind mit Material einer Dichte von 27 g/l und diejenigen mit den Endziffern 2 und 3 mit einer Dichte von 23 g/l aufgezeichnet. Das leichtere Material besitzt durch das weiter fortgeschrittene Vorschäumen einen geringeren Pentangehalt; deshalb steigt der Druck vergleichsweise langsamer an, und der Sinterdruck (SP2) zum Erweichungszeitpunkt (tw2), zu dem der Druckanstieg sich verlangsamt hat, liegt niedriger als bei dem anderen Material. Jedoch die Sintertemperatur (ST2) ist vergleichsweise höher, da der Pentangehalt geringer ist. Wird die gleiche Haltezeit (TH2a) wie im ersten Fall vorgesehen, so ergeben sich die durchgezogen gezeichneten Verläufe. Das leichtere Material wird nach Abkühlung auf einen niedrigeren Entformungsdruck (EP2) zum Zeitpunkt (TE2) entformt.

Bei dem Druckverlauf (Pv3) handelt es sich um die Sinterung eines Produktes, das möglichst porenfrei werden soll. Deshalb ist die Haltezeit um den Zeitabschnitt (TH2b) noch verlängert. Durch die dabei auftretende stärkere Aufheizung dauert auch die Abkühlung und der Druckabbau bis auf den Entformungsdruck (EP2) länger als beim Druckverlauf (Pv2) mit kürzerer Haltezeit (TH2a). Sofern auch die Nachverformung durch Nachblähen geringer sein soll als im andseren Beispiel, wird der Entformungsdruck noch etwas tiefer festgelegt. Die maximale Entformungstemperatur ist auch beim Temperaturverlauf (Tv2) vor dem vorgeschriebenen Entformungsdruck (EP2) erreicht. Die maximalen Entformungstemperaturen (ET1, ET2) sind jeweils um einen Temperaturunterschied (TU) unter der jeweiligen Sintertemperatur (ST1, ST2) festgelegt. Auch dieser Temperaturunterschied (TU) wird bei erhöhter Anforderung an die Formgenauigkeit vergrößert, wodurch der eingefrorene Zustand des Materials erhalten bleibt, auch wenn sich nach dem Ausformen durch den Wärmefluß aus dem Inneren des Formlings die Oberfläche nochmals entwas erwärmt. Der MindestTemperaturunterschied (TU) ist dem Erweichungsbereich angepaßt, der hier etwa 20 gradC beträgt.

In Fig. 2 sind zwei Druckverläufe (Pva, Pvb) dargestellt, die sich auf trockenes und feuchtes Sintermaterial beziehen. Für das trockene Material ist die Heizphase (Ph) und die Kühlphase (Pk), die bis zum Entformungszeitpunkt (TEa) dauert, eingezeichnet. Zum Zeitpunkt (ts) beginnt die Autoklavbedampfung. Es wird dann in Zeitabständen (Dt), die kurz sind gegenüber der Druckaufbauzeit und z.B. 100 ms betragen, jeweils der Druck gemessen und die Druckdifferenz, die der Druckanstiegsgeschwindigkeit (DPS1, DPS2,.....DPSn) entspricht fortlaufend bestimmt. Dann werden diese Größen jeweils mit der Anfangsdruckanstiegsgeschwindigkeit (DPS1) verglichen und festgestellt, wann ein vorgeschriebenes Maß der Druckanstiegsgeschwindigkeit unterschritten ist. Dieses Maß ist vorteilhaft relativ, z.B. auf 25 Prozent zur Anfangsdruckanstiegsgeschwindigkeit festgelegt. Zu diesem Zeitpunkt, dem Erweichungszeitpunkt, wird der Sintrdruck (PSa) bestimmt und durch Vorgabe der Haltezeit (TH) jeweils das Ende der Heizphase (Ph) bestimmt. Das Ende der Kühlphase ist gegeben, wenn der Druck zum Entformungszeitpunkt (TEa) unter den vorgegebenen maximalen Entformungsdruck (EPa) gesunken ist. Das feuchtere Material führt zu dem Verlauf, dessen Kenngrößen mit dem Endbuchstaben b bezeichnet sind. Die Zeiten verlängern sich durch den höheren Energiebedarf. Die Anfangsdruckanstiegs-Geschwindigkeit (DPS1b) ist geringer; dementsprechend ist die Druckanstiegsgeschwindigkeit bei Erreichen des Sinterdrucks (PSb) geringer.

Das Steuerungsverfahren ist somit unabhängig von dem Feuchtigkeitsgehalt des Materials funktionstüchtig.

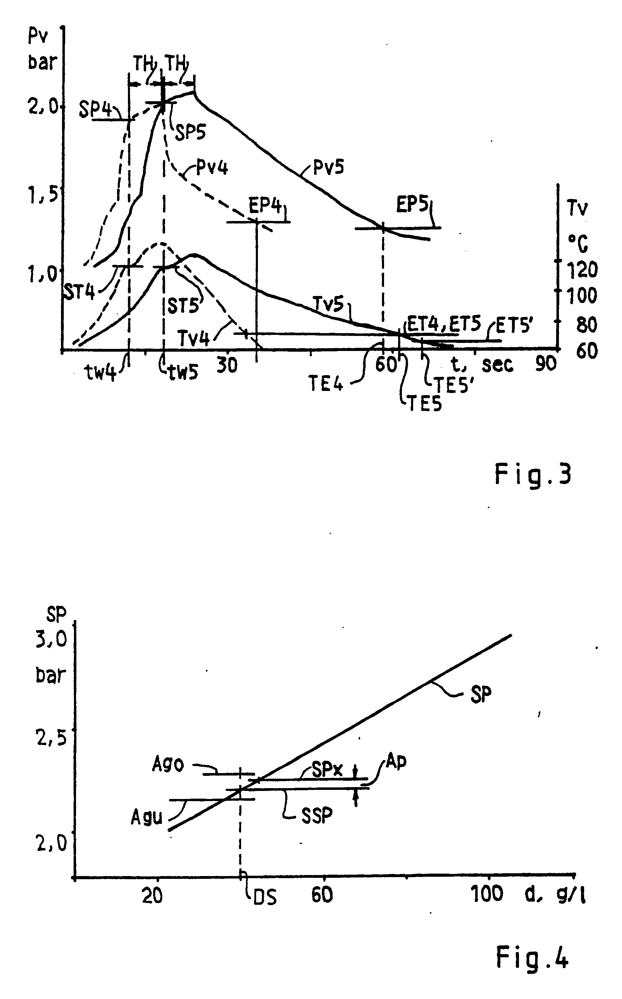

In Fig. 3 sind die Druck- und Temperaturverläufe (Pv4, Pv5, Tv4, Tv5) eines 5 mm und eines 70 mm starken Formlings gestrichelt bzw. durchgezogen gezeigt. Bei dem dünnen Formling ist der Erweichungszeitpunkt (tw4) schneller erreicht, und der Sinterdruck (SP4) ist geringer als der Sinterdruck (SP5) des dickeren Formlings zum Erweichungszeitpunkt (tw5). Beide Teile werden mit der Haltezeit (TH) nach dem Erweichen gesintert und dann gekühlt, was bei dem dünnen Teil entsprechend schneller geht. Wegen der Gleichartigkeit des Materials ist die Sintertemperatur (ST4, ST5) jeweils gleich und so auch die maximale Entformungstemperatur (ET4, ET5). Die maximalen Entformungsdrücke (EP4, EP5) sind jedoch entsprechend den Sinterdrücken (SP4, SP5) zweckmäßig zur Vermeidung eines Nachblähens des dickeren Formlings verschieden. Es zeigt sich, daß der dünne Formling bei Erreichen des höheren Entformungsdruckes (EP4) und der dicke bei Erreichen der Entformungstemperatur (ET5) oder der etwas tiefer liegenden Entformungstemperatur (ET5'), wie später erläutert wird, entsprechend zu den Zeitpunkten (TE4 bzw. TE5 oder TE5') zu entformen sind.

Das Steuerungsverfahren ist somit völlig unabhängig von der Gestalt des Formlings. Bei ungünstigen Bedingungen verlängert sich jedoch die Prozeßzeit. Um jedoch nicht nur im Sinter-Teilprozeß nachträglich Materialeigenschaften, die durch die vorgelagerten Teilprozesse bestimmt sind, in ihrer Auswirkung auszugleichen, ist eine Rückkopplung von Steuersignalen zu den vorhergehenden Teilprozessen vorgesehen.

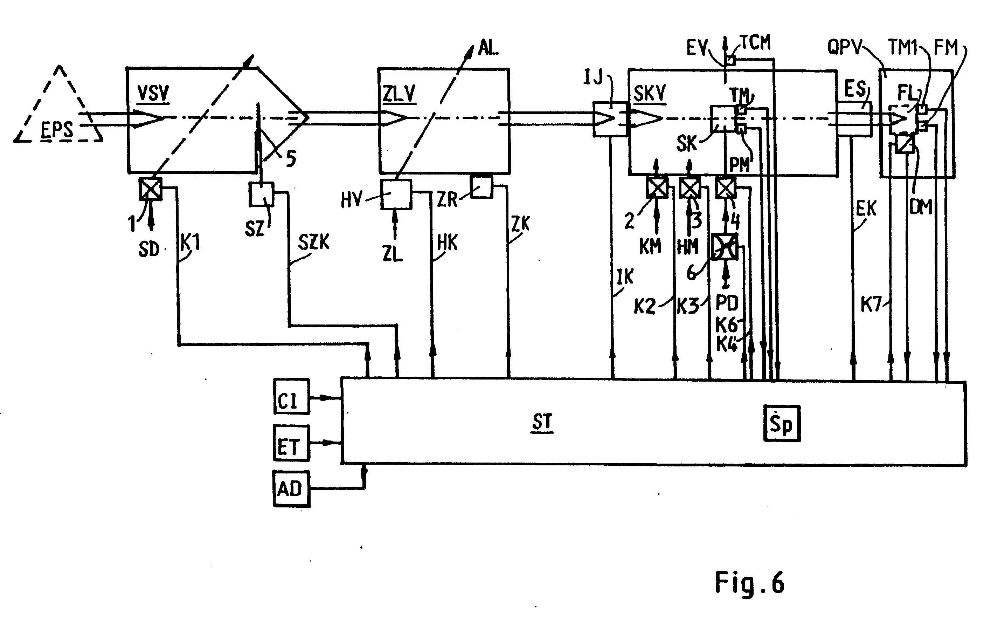

Ein Überblick ist in Fig. 6 gegeben. Der expandierbare Polystyrol-Schaumstoff (EPS) durchläuft drei Teilprozesse. In der Vorschäumvorrichtung (VSV) wird er mit Schäumdampf (SD) beaufschlagt, der über ein Ventil (1) regelbar zugeführt wird. Die Schäumzeit wird durch eine Zeitsteuervorrichtung (SZ) mit dem einstellbaren Schieber (5) bestimmt, bei dessen Passieren die vorgeblähten Schaumstoffperlen in die Trocken- und Zwischenlagervorrichtung (ZLV) geleitet werden. Dort werden sie mit in der Heizvorrichtung (HV) geheizter Zuluft (ZL) beaufschlagt, die mit Feuchtigkeit beladen als Abluft (AL) die Vorrichtung verläßt. Die Verweilzeit des vorgeschäumten Kunststoffes im Zwischenlager wird durch einen Zeitregler (ZR), z.B. eine steuerbare Fördereinrichtung, bestimmt. Eine weitere Zwischenlagerung kann bei niedrigerer Temperatur erfolgen.

Das fertig konditionierte Material wird mit dem Injektor (IJ) der Sintervorrichtung (SKV), jeweils die Sinterkammer (SK) füllend, zugeführt. Von dort wird nach Sinterung und Kühlung der Formling (FL) durch die Öffnungs-Schließ-Entformvorrichtung (ES) in bekannter Weise entnommen und ggf. einer Qualitätsprüfvorrichtung (QPV) zugeführt. In die Sintervorrichtung wird, gesteuert über die Ventile (2) und (3), ein Heiz- bzw. Kühlmedium (HM, KM) zugeführt. Anfallendes Kondensat wird ständig über eine Entsorgung (EV) abgeführt. Der Sinterkammer (SK) wird, über das Ventil (4) während der Heizphase (Ph) gesteuert, der Prozeßdampf (PD) zugeführt. An der Sinterkammerinnenwand befindet sich je ein Temperatur- und Druckmeßfühler (TM, PM), dessen Signalleitungen einer Steuervorrichtung (ST) zugeführt sind. Auch in der Heizkammer oder Dampfkammer kann ein zur Auswertung geeigneter Druck- oder Temperaturverlauf gemessen werden; z.B. ist an der Entsorgungsleitung ein Temperaturmeßfühler (TCM) angeschlossen. Dessen Signale zeigen zwar einen anderen Verlauf als der Temperaturfühler (TM); aber auch dieser Verlauf zeigt charakteristische Merkmale zum Erweichungszeitpunkt, da während des ersten, autoklaven Heizens die Kondensattemperatur fast konstant bleibt und sie nach der Erweichung des Sintergutes rapide steigt. In einer einfachsten Vorrichtung genügt somit die Anordnung und Auswertung dieses Temperaturmelders (TCM) bzw. -signales.

An die Steuervorrichtung (ST) sind weiterhin eingangsseitig eine Uhr (CI) und eine Eingabevorrichtung (ET), z.B. eine Tastatur, für die Vorgabe von Qualitätsstufen, einer Haltezeit (HT), einem Temperaturunterschied (TU) usw. angeschlossen. Die Steuervorrichtung verknüpft die Eingangssignale gemäß einem Steuerprogramm entsprechend dem Verfahren und steuert über Ausgangssignalleitungen die genannten Vorrichtungen.

Über die Signalleitungen (K1 bis K4) werden die Ventile (1 bis 4) gesteuert, wobei mit dem Ventil (1) die Vorschäumung, mit dem Öffnen des Ventils (2) die Kühlphase (Pk) und mit dem Öffnen der Ventile (3 und 4) die Heiz- und Sinterphase (Ph) gesteuert wird. Weiterhin steuert das Signal (SZK) die Schäumzeit, das Signal (HK) die Heizvorrichtung (HV), das Signal (ZK) die Zwischenlagerzeit, das Signal (IK) die Injektion und das Signal (EK) das Schließen und Öffnen der Form und die Entformung. Betriebsund Störmeldungen, z.B. bei Grenzwertüberschreitung, werden auf eine Druck- oder Anzeigevorrichtung (AD) ausgegeben.

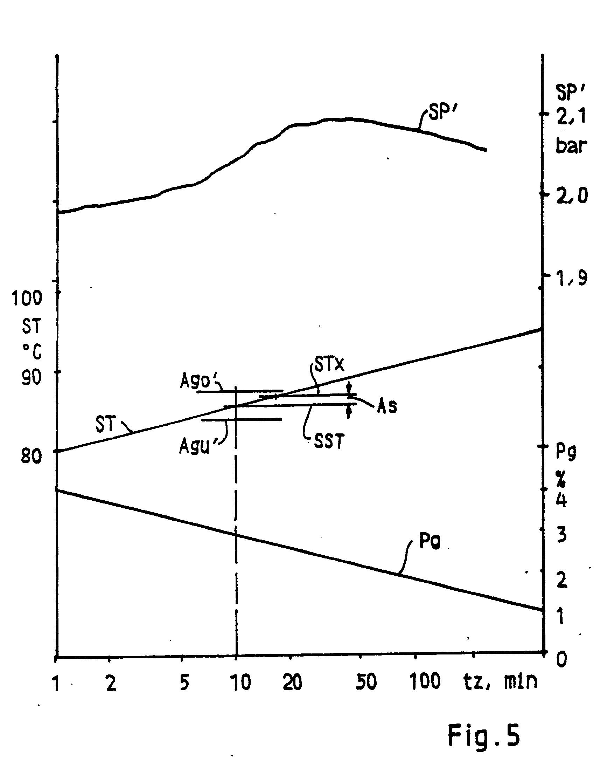

Die Steuerung der dem Sintern vorgelagerten Teilprozesse ist an Hand der Fig. 4 und 5 ersichtlich, die auf Versuchsreihen unter bestimmten praktischen Bedingungen basieren. In Fig. 4 ist die Abhängigkeit des Sinterdrucks (SP) gezeigt, den Materialien, die auf verschiedene Dichten (d) geschäumt sind, entwickeln. Ist die Soll-Dichte (DS) 40 g/l, so ergibt sich erfahrungsgemäß ein Soll-Sinterdruck (SSP). Liegt nun bei einer Sinterung der tatsächlich erreichte Sinterdruck (SPx) um eine Abweichung (Ap) höher, so ist die Dichte zu hoch und die Schäumdampfzufuhr muß über eine Verstellung des Ventils (1) erhöht werden oder die Schäumzeit muß durch Verstellen des Schiebers (5) erhöht werden. Sofern eine Regelvorrichtung für die Dichte vorgesehen ist, kann auch indirekt über eine geänderte Dichte-Sollwertvorgabe die Korrektur erfolgen. Der Regelbereich wird durch die Überwachung eines Bereiches für die Abweichung (Ap) zwischen einer oberen und einer unteren Grenze (Ago, Agu) begrenzt.

In Fig. 5 sind die Vorgänge in der Zwischenlagervorrichtung (ZLV) gezeigt, die bei 60 gradC auftreten. Der Pentangehalt (Pg) nimmt von anfänglich 4 Prozent in ca. 8 h auf 1 Prozent ab. Hirdurch nimmt die Sintertemperatur (ST), die jeweils entsprechend konditioniertes Material zeigt, von ca. 80 gradC auf ca. 93 gradC zu. Weiterhin ergibt sich ein Sinterdruck (SP'), der mit einer Dauer der Zwischenlagerung bis zu etwa 1 h zunimmt und darüber wieder abnimmt. Die Temperatur, die die Innenwand der Sinterkammer hat, kann um einige Grade von der Temperatur des Sintermaterials abweichen.

Die jeweils gemessene Sintertemperatur (STx) wird mit einer als günstig bekannten Soll-Sintertemperatur (SST) verglichen und die Abweichung (As) zur Steuerung der Zeitsteuervorrichtung (ZR) oder der Heizvorrichtung (HV) korrigierend genutzt. Die Abweichung (AS) wird jeweils auf die Einhaltung der Grenzwerte (Ago', Agu') geprüft und der Regelbereich so begrenzt. Ist einer der Grenzwerte (Ago, Ago', Agu, Agu') erreicht, so wird zweckmäßig eine Meldung an den Bediener der Vorrichtung ausgegeben.

In entsprechender Weise werden jeweils die Werte der Druckanstiegsgeschwindigkeit (DPS1, DPS1b) oder auch der Temperaturanstiegsgeschwindigkeit zur Steuerung der Heizvorrichtung (HV) zur Trocknungsregelung genutzt. Es ist auch möglich, die Trocken- und Zwischenlagervorrichtung in zwei getrennte Vorrichtung aufzuteilen.

Das Verfahrens ist auch anwendbar, wenn zum Heizen oder Kühlen andere bekannte Methoden unter Verwendung von Mikrowellen, Druckluft oder Vakuum benutzt werden.

In Fig. 6 ist weiterhin eine spezielle Anordnung von mit der Steuervorrichtung (ST) verbundenen Meßmitteln gezeigt, die eine Qualitätsüberwachung des Sinterteilprozesses erlaubt und Informationen liefert, die die automatische Vorgabe der Sinterzeit, der Temperaturdifferenz zwischen Sinter- und Entformungstemperatur und eines Sinterdampfdruckes ermöglicht, so daß bei gegebenen Qualitätsmaßstab der Sinterprozeß optimal abläuft. Die Meßmittel können in der Sintervorrichtung selbst oder in einer getrennten Qualitätsprüfvorrichtung (QPV), in die der Formling (FL) jeweils nach dem Entformen oder bei dem Entformen übernommen wird, angeordnet sein. Der Feuchtigkeitsmesser (FM) ist zweckmäßig ein bekannter elektromagnetisch arbeitender Absorbtionssensor.

Ein Temperaturmelder (TM1) ist zweckmäßig zur Bestimmung der Korrelation der Meßwerte der Druckspannungs- und Verzögerungsfaktormessung nahe den entsprechenden Meßfühlern (DM) angeordnet. Für die Druckspannungsbestimmung wird ein Stempel mit einem bestimmten Druck, gesteuert durch die Steuervorrichtung (ST), über Leitung (K7) aktiviert auf die Oberfläche des Formlings (FL) gepreßt und dabei der Verlauf des Eindringens des Stempels gemessen und ausgewertet. Weiterhin wird entweder der gleiche Stempel oder ein anderer ein- oder mehrfach, jeweils durch weitere Steuersignale ausgelöst, stoßartig in die Oberfläche eingedrückt, wobei ebenfalls der Verlauf und die Tiefe des Eindringens bestimmt wird. Aus den gemessenen Werten ergibt sich über Eichtabellen im Zusammenhang zur Temperatur jeweils die Druckspannung bzw. der Verzögerungsfaktor.

Der Verzögerungsfaktor wird mit einem vorgegebenen Wert verglichen und die so festgestellte Abweichung dient zur Steuerung des Dampfdrucksteuerventils (6) über die Steuerleitung (K6), wobei im allgemeinen ein zu niedriger Verzögerungsfaktor eine Erhöhung des Prozeßdampfdruckes bewirkt. Weiterhin ist ein zu niedriger Verzögerungsfaktor ein Anzeichen für eine Entformung bei zu hoher Temperatur, da insbes. bei dicken Formlingen das Innere dann noch plastisch reagiert. Dementsprechend wird der Temperaturunterschied zur Entformung erhöht vorgegeben.

Da abhängig von der Dicke die Oberflächentemperatur durch den Wärmefluß aus dem Inneren des Formlings nach der Entformung wieder ansteigt, wird mit dem Temperaturmelder (TM1) diese Temperaturerhöhung bestimmt und daraus die relevanten Vorgabewerte abgeleitet. So wird die Entforungstemperatur (ETS') um diese bestimmte Temperaturerhöhung bei den dickeren Teilen gegenüber der Entformungstemperatur (ET5), s. Fig. 3, abgesenkt und das Teil entsprechend später zum Zeitpunkt (TE5') entformt.

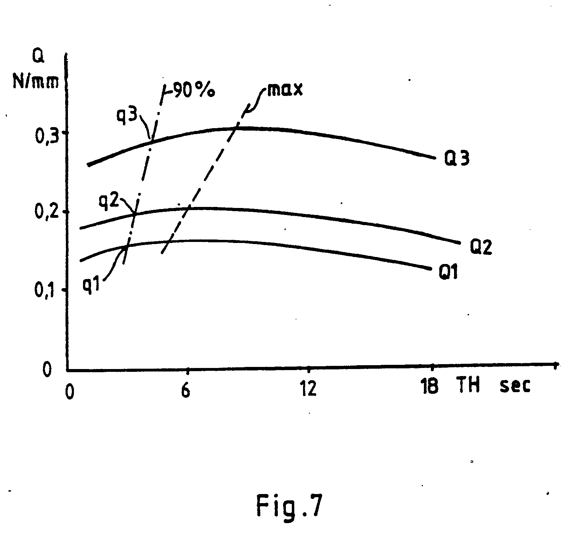

Den Zusammenhang gemessener Druckspannungen (Q3, Q2, Q1) für Materialien der Dichte 37, 28 und 23 g/l mit der Haltzeit (TH) zeigt Fig. 7. Es zeigt sich an der gestrichelten Linie (max), die die Maxima verbindet, daß zur Erreichung der maximalen Druckspannung dichtere Materialien eine längere Haltezeit benötigen. Es wird jedoch bereits bei etwa der Hälfte der auf das Maximum bezogenen Haltezeit etwa 90 Prozent der maximalen Druckspannung erreicht, weshalb die strichpunktierte 90-Prozent-Linie eine jeweils günstige Haltzeitvorgabe angibt. Abweichungen von Meßwerten an Formlingen von dem so vorgegebenen Druckspannungssollwert (q1, q2, q3) werden in korrigierender Tendenz zur Haltezeitbestimmung für die folgenden Sinterzyklen genutzt. Würde keine Begrenzung der erlaubten Abweichung vorgesehen, so ist es leicht ersichtlich, daß bei einer Abweichung über die Maximumlinie hinaus eine instabile Regelung mit falscher Tendenz erfolgen würde.

Es ist nach dem an den Beispielen erklärten Verfahren leicht möglich, ähnliche Zusammenhänge von anderen Qualitäts-Parametern zu geeigneten Prozeßparametern zu ermitteln und eine adaptive Regelung zur Erreichung der vorgeschriebenen Qualität vorzunehmen. Zwecks Stabilität der Regelung ist dabei jeweils nur ein vorgegebener Bereich der Steuergrößen zuzulassen. Der Speicher (Sp) - Fig. 6 - in der Steuervorrichtung (ST) dient zur Aufnahme des Steuerprogramms gemäß des Verfahrens und der Steuer- und Regelgrößen, Zeitfolgen usw.. Da im allgemeinen mit einer Steuervorrichtung diverse Formwerkzeuge bedient werden, werden die im Laufe eines Prozesses erreichten Steuer- und Regelgrößen zugeordnet zu dem Produkt archiviert und für eine erneute Inbetriebnahme als Anfangswerte wieder eingesetzt, so daß dann unmittelbar hochwertige Teile erzeugt werden und allenfalls wenige anfängliche Adaptionszyklen bis zur Erreichung eines optimalen Betriebes erforderlich sind.

Durch die Regelung des Sinterprozesses in Bezug auf Sinterdruck und Haltezeit auf Grund der Messung der Qualitätsmerkmale können noch aus den vorliegenden Teilprozessen verbliebene Abweichungen vom Standard, die z.B. durch Überlagerung des vorgeschäumten Materials in Folge von einer Betriebsstörung entstehen, ausgeglichen werden, was jedoch unter Umständen auf Kosten der Prozeßenergie oder -zeit geschieht.

Da bei Erhöhung des Prozeßdampfdruckes die Aufheizung des Sintergutes bis zum Erweichungspunkt schneller geschieht, ist dies bei der Auswertung der Druck- oder Temperaturanstiegsgeschwindigkeit zur Steuerung des Trocknungsvorganges durch eine entsprechend geänderte Sollwertvorgabe zu berücksichtigen.

**Patentansprüche**

1. Verfahren zum Schäumen und Sintern von Kunststoffen, bei dem schäumbarer Kunststoff in einem Vorschäumer durch gesteuerte Wärmezufuhr vorgeschäumt wird, so daß dessen Dichte oder Perlgröße verringert bzw. vergrößert wird, und danach zur Trocknung, Luftaufnahme und Treibgasabgabe bei vorgegebener Temperatur und Luftfeuchtigkeit für einen bestimmten Zeitraum zwischengelagert wird und dann in einzelnen Arbeitszyklen in eine Sinterkammer, diese jeweils füllend, injiziert wird, in welcher ihm in einer Heizphase Wärme und Prozeßdampf zugeführt wird, wobei meßsignalabhängig das Ende der Zuführung des Prozeßdampfes und das Ende der Heizphase und damit der Beginn einer Kühlphase bestimmt wird und druck- und temperaturabhängig das Ende der Kühlphase und der Entformungszeitpunkt des Sinterkörpers bestimmt wird, dadurch gekennzeichnet, daß während der Heizphase (Ph) aus einem Druck- und/oder dem Temperaturverlauf (Pv1, Pv2; Tv1, Tv2) in der Sinterkammer jeweils ein Erweichungszeitpunkt (tw1, tw2) des Kunststoffes bestimmt wird und von diesem Erweichungszeitpunkt (tw1, tw2) aus jeweils das Ende der Heizphase (Ph) und der Prozeßdampfzuführung sowie der Beginn der Kühlphase (Pk) bestimmt wird und daß aus einer Sintertemperatur (ST1, ST2), die zum Erweichungszeitpunkt herrscht, und/oder einem Sinterdruck (Sp1, Sp2), der zum Erweichungszeitpunkt herrscht, der Entformungszeitpunkt (TE1, TE2) bestimmt wird oder vorzugsweise eine maximale Entformungstemperatur (ET1, ET2) und ein maximaler Entformungsdruck (EP1, EP2) bestimmt werden und das Entformen dann geschieht, wenn beide genannten Maximalwerte erreicht bzw. unterschritten sind.

2. Verfahren nach Anspruch 1, dadurch gekennzeichnet, daß der Erweichungszeitpunkt (tw1, tw2) dadurch bestimmt wird, daß jeweils aus dem Druckverlauf (Pv1, Pv2) eine Druckanstiegsgeschwindigkeit (DPS1, DPS2) in relativ kurzen Zeitabständen (Dt), z.B. 100 ms, fortlaufend bestimmt wird und diese jeweils mit der Druckanstiegsgeschwindigkeit (DPS1) zu einem Zeitpunkt (ts) nach einer Entlüftung der Sinterkammer verglichen wird und dabei gesprüft wird, ob sie um ein bestimmtes Maß, vorzugsweise um 25 Prozent, abgenommen hat, wobei bei Zutreffen diesem Ereignis der Erweichungszeitpunkt (tw1, tw2), zugeordnet wird und die dann jeweils gemessene Temperatur als die Sintertemperatur (ST1, ST2) und der dann jeweils gemessene Druck als der Sinterdruck (SP1, SP2) bestimmt werden.

3. Verfahren nach Anspruch 1, dadurch gekennzeichnet, daß der Erweichungszeitpunkt (tw1, tw2) dadurch bestimmt wird, daß aus dem Temperaturverlauf (Tv1, Tv2) jeweils eine Temperaturanstiegsgeschwindigkeit (DTS1, DTS2) in relativ kurzen Zeitabständen (Dt) fortlaufend bestimmt wird und diese jeweils mit der mittleren Temperaturanstiegsgeschwindigkeit (DTS1) seit Beginn der Zuführung des Prozeßdampfes nach einer Entlüftung der Sinterkammer verglichen wird und dabei geprüft wird, ob sie um ein bestimmtes Maß, z.B. 50 Prozent, sich geändert hat, wobei diesem Ereignis der Erweichungszeitpunkt (tw1, tw2), und eine dann jeweils gemessene Temperatur als die Sintertemperatur (ST1, ST2) und ein dann jeweils gemessener Druck als der Sinterdruck (SP1, SP2) zugeordnet wird.

4. Verfahren nach Anspruch 3, dadurch gekennzeichnet, daß der Temperaturverlauf an einer Kondensatableitung der Sinterkammer zur Bestimmung des Erweichungszeitpunktes ausgewertet wird und der Erweichungszeitpunkt (tw1, tw2) einem Zeitpunkt zugeordnet wird, an dem die Kondensattemperatur in einem der Zeitabstände (Dt) um ein mehrfaches schneller als in einem früheren ansteigt.

5. Verfahren nach Anspruch 3, dadurch gekennzeichnet, daß der Temperaturverlauf (Tv1, Tv2) an einer Sinterkammerwandung zur Bestimmung des Erweichungszeitpunktes (tw1, tw2) ausgewertet wird und der Erweichungszeitpunkt (tw1, tw2) einem Zeitpunkt zugeordnet wird, an dem die Temperatur kurzzeitig, z.B. einige 100 ms, wesentlich langsamer als vorher ansteigt oder um einen vorgegebenen Temperaturbereich, z.B. 1 gradC, absinkt und dann wieder schneller ansteigt.

6. Verfahren nach Anspruch 1, dadurch gekennzeichnet, daß das Ende der Heizphase (Ph) und der Prozeßdampfzuführung dadurch bestimmt wird, daß nach dem Erweichungszeitpunkt (tw1, tw2) gemäß eines vorgegebenen Qualitätsstandards, insbes. eines Verzögerungsfaktors, eine Haltezeit (TH1, TH2, TH2b) unterschiedlicher Dauer, von z.B. 4, 6 oder 8 sec., vorgegeben wird.

7. Verfahren nach Anspruch 1 dadurch gekennzeichnet, daß der Entformungszeitpunkt (TE1, TE2) um so später gewählt wird, je niedriger die jeweils ermittelte Sintertemperatur (ST1, ST2) ist, oder daß der maximale Entformungsdruck (EP1, EP2) um so niedriger gewählt wird, je niedriger die jeweils ermittelte Sintertemperatur (ST1, ST2) ist, und daß die maximale Entformungstemperatur (ET1, ET2) um so niedriger gewählt wird, je niedriger die jeweils ermittelte Sintertemperatur (ST1, ST2) ist, und daß der Temperaturunterschied (TU) zwischen der Entformungstemperatur (ET1, ET2) und der ermittelten Sintertemperatur (ST1, ST2) um so größer gewählt wird, je niedriger ein zulässiges Nachbläh- oder Schwundmaß vorgegeben ist und je dicker das Formteil ist oder je höher eine Temperaturerhöhung an einem entformten Teil festgestellt wird.

8. Verfahren nach einem der vorherigen Ansprüche, dadurch gekennzeichnet, daß die Druck- und/oder Temperaturanstiegsgeschwindigkeit (DPS1, DPS1b) jeweils mit einer vorgegebenen Soll-Anstiegsgeschwindigkeit verglichen wird und gemäß der Abweichung bei langsamerem Temperatur- oder Druckanstieg eine Steuerung des Trocknungs-Teilprozesses in der Weise erfolgt, daß eine längere oder, z.B. durch Temperaturerhöhung, intensivierte Trocknung vorgenommen wird und umgekehrt.

9. Verfahren nach einem der vorherigen Ansprüche, dadurch gekennzeichnet, daß jeweils der Sinterdruck (SPx) mit einem vorgegebenen Soll-Sinterdruck (SSP) verglichen wird und gemäß der Abweichung (AP) eine Steuerung des Vorschäumteilprozesses in der Weise erfolgt, daß bei höherem Sinterdruck (SPx) das Vorschäumen verlängert oder die Schäumdampfzufuhr erhöht wird und umgekehrt.

10. Verfahren nach Anspruch 9, dadurch gekennzeichnet, daß die Steuerung des Vorschäumteilprozesses in der Weise erfolgt, daß gemäß der Abweichung (Ap) ein Perlgrößen- oder ein Dichte-Sollmaß (DS) in der Weise korrigiert wird, daß bei höherem Sinterdruck (SPx), das Perlgrößen-Sollmaß vergrößert bzw. das Dichtesollmaß (DS) verringert wird und umgekehrt.

11. Verfahren nach einem der vorherigen Ansprüche, dadurch gekennzeichnet, daß die Sintertemperatur (STx) mit einer vorgegebenen Soll-Sintertemperatur (SST) verglichen wird und gemäß der Abweichung (As) eine Steuerung des Zwischenlagerteilprozesses in der Weise erfolgt, daß bei niedriger Sintertemperatur (STx) die Zwischenlagertemperatur erhöht oder die Zwischenlagerzeit (tz) verlängert wird und umgekehrt.

12. Verfahren nach Anspruch 1, dadurch gekennzeichnet, daß jeweils ein Feuchtigkeitsgehalt des Formlings (FL) gemessen wird und abhängig von einer positiven Abweichung des Feuchtigkeitsmeßwertes von einem vorgegebenen Sollwert ein Sinterdampfdruck in den folgenden Sinterzyklen entsprechend erhöht wird bzw. umgekehrt.

13. Verfahren nach Anspruch 1, dadurch gekennzeichnet, daß jeweils eine Druckspannung (Q1, Q2, Q3) des Formlings (FL) gemessen wird und abhängig von einer positiven Abweichung des Druckspannungsmeßwertes von einem jeweils vorgegebenen Druckspannungs-Sollwert (q1, q2, q3), der vorzugsweise einem 90-Prozentwert eines maximal erreichbaren Druckspannungswertes entspricht, für die folgenden Sinterzyklen die Haltezeit (TH, TH1) jeweils entsprechend verkürzt wird bzw. umgekehrt.

14. Verfahren nach Anspruch 1, dadurch gekennzeichnet, daß jeweils ein Verzögerungsfaktor des Formlings (FL) gemessen wird und abhängig von einer positiven Abweichung des Verzögerungsfaktormeßwertes von einem vorgegebenen Sollwert für die folgenden Sinterzyklen ein Sinterdampfdruck erniedrigt wird und/oder die Entformungstemperatur heraufgesetzt wird bzw. umgekehrt.

15. Verfahren nach Anspruch 13 oder 14, dadurch gekennzeichnet, daß die Druckspannung und der Verzögerungsfaktor gleichzeitig mit der Oberflächentemperatur des Formlings gemessen wird und der Druckspannungssollwert bzw. der Verzögerungsfaktor-Sollwert der Temperatur gemäß einer gespeicherten Tabelle entnommen wird, in der die Zusammenhänge zugeordnet gespeichert sind.

16. Verfahren anch Anspruch 15, dadurch gekennzeichnet, daß jeweils eine maximale Oberflächentemperaturerhöhung am Formling (FL) nach dessen Entformung gemessen wird und dieser Erhöhung entsprechend eine Absenkung der ansonsten aus der Sintertemperatur (ST5) bestimmten maximalen Entformungstemperatur (ET5) für die folgenden Sinterzyklen auf eine niedrigere Entformungstemperatur (ET5') vorgenommen wird.

17. Verfahren nach einem der Ansprüche 8 bis 16, dadurch gekennzeichnet, daß die Steuerungen jeweils durch inkrementale Erhöhung bzw. Erniedrigung pro Sinterzyklus der beeinflußten Steuergröße, z.B. der Schäum-, Trocken-, Sinter-, Entformungstemperatur, Schäum-, Trocken- bzw. Haltezeit, oder des betreffenden beeinflußten Sollwertes erfolgt, so daß sich sukzessiv die jeweils ermittelten Abweichungen (Ap, As) von den Sollwerten, z.B. der Druckanstiegsgeschwindigkeit, der Sintertemperatur, des Sinterdruckes, der gemessenen Druckspannung bzw. des Verzögerungsfaktors, verringern.

18. Verfahren nach einem der Ansprüche 8 bis 17, dadurch gekennzeichnet, daß die Abweichungen (Ap, AS) jeweils mit einem oberen und unteren Grenzmaß (Ago, Agu, Ago', Agu') verglichen werden bei deren Überschreiten eine Störungsmeldung ausgegeben wird und auf deren entsprechenden Wert das zur Steuerung verwandte Abweichungsmaß beschränkt wird.

19. Vorrichtung zur Durchführung des Verfahrens nach einem der Ansprüche 1 bis 18, dadurch gekennzeichnet, daß sie aus einer Sinterkammervorrichtung (SKV) besteht, in der ein Druckmelder (PM) und/oder ein Temperaturmelder (TM, TCM) angeordnet ist, dessen Ausgangssignal einer Steuervorrichtung (ST) zugeführt ist, die gemäß des Verfahrens programmgesteuert eine Signalauswertung vornimmt und entsprechende Steuersignale (K1, SZK, HK, EK, ZK) mittelbar oder unmittelbar an eine Schäumdampfsteuervorrichtung (SD) oder eine Schäumzeitregelvorrichtung (SZ) einer Vorschäumvorrichtung (VSV) und eine Heizvorrichtung (HV) oder eine Zwischenlagerzeitsteuervorrichtung (ZR) einer Zwischenlagervorrichtung (ZLV) und einer Entformvorrichtung (ES) der Sinterkammervorrichtung (SKV) gibt.

20. Vorrichtung nach Anspruch 19, dadurch gekennzeichnet, daß der Sinterkammervorrichtung (SKV) eine Qualitätsprüfvorrichtung (QPV) zu- oder nachgeordnet ist, die einen Druckspannungs- und Verzögerungsfaktormeßfühler (DM), einen Temperaturmelder (TM1) und/oder einen Feuchtigkeitsmelder (FM) enthält, deren Signale der Steuervorrichtung (ST) zugeleitet werden und dem Verfahren gemäß ausgewertet werden, und daß der Sinterkammervorrichtung (SKV) der Prozeßdampf (PD) über ein Ventil (4) und eine Prozeßdampfdrucksteuervorrichtung (6) von der Steuervorrichtung (ST) gemäß dem Verfahren über Steuersignale (K4, K6) gesteuert zugeführt wird.

## Claims

1. Process for foaming and sintering plastics, in which foamable plastic is pre-foamed in a preliminary foaming unit by means of the controlled application of heat, so that its density or granule size is reduced or enlarged, and it is then kept in interim storage for drying, air absorption and emission of active gas, at a preset temperature and humidity, for a certain period and then injected into a sintering chamber in separate work cycles, filling the chamber each time, where heat and processing steam are applied to it in a heating phase, whereby the end of the application of processing steam and the end of the application of heat, and hence the start of a cooling phase, are determined by means of a measuring signal, and the end of the cooling phase and the time to release the sintered blank from the mould are determined in function of pressure and temperature,
characterised by the fact that during the heating phase (Ph) a softening point (tw1, tw2) or the plastic is determined from the pressure and/or temperature patterns (Pv1, Pv2; Tv1, Tv2) in the sinter chamber, and from this softening point (tw1, tw2) the end of the heating phase (Ph) and the application of processing steam and the start of the cooling phase (Pk) are determined, and by the fact that from a sinter temperature (ST1, ST2) prevailing at the time the softening point is reached, and/or from a sinter pressure (Sp1, Sp2) prevailing at the same time, the time for turning out of the mould (TE1, TE2) is determined, or preferably a maximum turning out temperature and a maximum turning out pressure (EP1, EP2) are determined and the turning out then takes place when both the maximum values are reached or they fall below same.

2. Process as per claim 1, characterised by the fact that the softening point (tw1, tw2) is determined by the continuous measuring, at relatively short intervals (Dt) e.g. 100 ms, of a pressure increase speed (DPS1, DPS2) on the basis of the pressure pattern, and this speed is compared with the pressure increase speed (DPS1) at a time (ts) after one evacuation of the air from the sinter chamber and is thus checked to see whether it has dropped by a certain amount, preferably by 25%, whereby when this situation is reached the softening point (tw1, tw2) is allocated to it and the temperature and the pressure then measured are determined as the sinter temperature (ST1, ST2) and sinter pressure (SP1, SP2).

3. Process as per claim 1, characterised by the fact that the softening point (tw1, tw2) is determined by continuously determining a temperature increase speed (DTS1, DTS2) at relatively short intervals (Dt) from the temperature pattern (Tv1, Tv2) and this speed is compared with the mean temperature increase speed (DTS1) since the start of the application of steam after one evacuation of the air from the sinter chamber and thus checked to see whether it has changed by a certain amount, e.g. 50%, whereby the softening point (tw1, tw2) and the temperature and pressure measured at that point are thus allocated as the sinter temperature (ST1, ST2) and the sinter pressure (SP1, SP2) respectively.

4. Process as per claim 3, characterised by the fact that the temperature pattern is evaluated on a condensate discharge from the sinter chamber to determine the softening point and the softening point (tw1, tw2) is allocated to a point when the condensate temperature rises in one of the time intervals (Dt) many times faster than in an earlier interval.

5. Process as per claim 3, characterised by the fact that the temperature pattern (Tv1, Tv2) is evaluated on the walls of the sinter chamber to determine the softening point (tw1, tw2) and the softening point (tw1, tw2) is allocated to a point when for a short time, e.g. a few 100 milliseconds, the temperature rises more slowly than previously or drops by a preset temperature interval, e.g. 1 degree C and then rises rapidly again.

6. Process as per claim 1, characterised by the fact that the end of the heating phase (Ph) and of the application of processing steam is determined by presetting a holding time (TH1, TH2, TH2b) of varying lengths, e.g. 4, 6 or 8 seconds, after the softening point (tw1, tw2), in accordance with a preset quality standard, in particular a delay factor.

7. Process as per claim 1, characterised by the fact that the lower the respective sinter temperature determined (ST1, ST2), the later the time selected for turning out (TE1, TE2), or, the lower the respective sinter temperature determined (ST1, ST2) the lower the maximum pressure selected for turning out (ET1, ET2), and that the lower a permissible inflation or shrinkage measure is set, the higher the temperature difference (TU) between the turning out temperature (ET1, ET2) and the sinter temperature (ST1, ST2) selected, and the thicker the mould-piece is or the higher a temperature increase observed in a turned out piece.

8. Process as per one of the above claims, characterised by the fact that the speed of pressure and/or temperature increase (DPS1, DPS1b) is compared with a preset rated speed and depending on the deviation, with a slower increase in temperature or pressure, the drying part of the process is controlled so that a longer drying process or, for instance by raising the temperature, a more intensive drying process, is undertaken, and vice versa.

9. Process as per one of the previous claims, characterised by the fact that the sinter pressure (SPx) is compared with a preset rated sinter pressure (SSP) and depending on the deviation (AP) the preliminary foaming part of the process is controlled so that the preliminary foaming is extended or the application of foaming steam is increased when the sinter pressure (SPx) is higher, and vice versa.

10. Process as per claim 9, characterised by the fact that the preliminary foaming process is controlled so that depending on the deviation (Ap) a rated granule size or a rated density (DS) is adjusted in such a way that where there is a higher sinter pressure (SPx) the rated granule size is increased or the rated density is reduced, or vice versa.

11. Process as per one of the previous claims, characterised by the fact that the sinter temperature (STx) is compared with a preset rated sinter temperature (SST) and depending on the deviation (As) the interim storage process is controlled so that where the sinter temperature (STx) is lower, the interim storage temperature is raised or the interim storage time (tz) is increased, and vice versa.

12. Process as per claim 1, characterised by the fact that a humidity content of the blank (FL) is measured and if the deviation from a preset rated value is positive, a sinter steam pressure is correspondingly raised in the subsequent sintering cycles, or vice versa.

13. Process as per claim 1, characterised by the fact that a pressure stress (Q1, Q2, Q3) of the blank (FL) is measured and if the deviation from a preset rated value (q1, q2, q3) is positive, preferably corresponding to 90 per cent of a maximum achievable pressure stress value, for subsequent sintering cycles the holding time (TH, TH1) is correspondingly shortened, or vice versa.

14. Process as per claim 1, characterised by the fact that a delay factor for the blank (FL) is measured and if the deviation from a preset rated value is positive, for the subsequent sintering cycles a sinter steam pressure is reduced and/or the turning out temperature is reduced, or vice versa.

15. Process as per claims 13 or 14, characterised by the fact that the pressure stress and the delay factor are measured at the same time as the surface temperature of the blank and the rated pressure stress and/or the rated delay factor are taken from a stored table in which the correlations are stored in the allocated combinations.

16. Process as per claim 15, characterised by the fact that a maximum surface temperature increase on the blank (FL) is measured after it is turned out, and corresponding to this increase the maximum turning out temperature (ET5), otherwise determined from the sinter temperature (ST5), is reduced for the subsequent sintering cycles to a lower turning out temperature (ET5').

17. Process as per one of claims 8 to 16, characterised by the fact that the control is implemented through incremental raising or lowering, in each sintering cycle, of the control values affected, e.g. the foaming, drying, sintering or turning out temperatures, the foaming, drying or holding times, or of the relevant rated values concerned, so that the respective deviations (Ap, As) from the rated values, e.g. the pressure increase speed, the sinter temperature, the sinter pressure, the measured pressure stress or the delay factor, are reduced.

**18.** Process as per one of claims 8 to 17, characterised by the fact that the deviations (Ap, As) are compared with an upper and lower limit value (Ago, Agu, Ago', Agu') and when they fall short of these an alarm is signalled and the deviation measurement used for the control is limited to the corresponding value.

**19.** Device for conducting the process as per one of claims 1 to 18, characterised by the fact that it comprises a sinter chamber device (SKV) in which a pressure signal (PM) and/or a temperature signal (TM, TCM) are accommodated, to whose output signal a control device (ST) is connected, which is programmed to evaluate the signal and gives corresponding control signals (K1, SZK, HK, EK, ZK), directly or indirectly, to a foam steam control device (SD) or a foam time regulating device (SZ) in a preliminary foam unit (VSV) and to a heating unit (HV) or an interim storage time control device (ZR) of an interim storage unit (ZLV) and of a turning out device (ES) in the sinter chamber unit (SKV).

**20.** Device as per claim 19, characterised by the fact that there is a quality control device (QPV) at or downstream from the sinter chamber unit (SKV), which contains a pressure stress and delay factor measuring sensor (DM); a temperature signal (TM1) and/or a humidity signal (FM), whose signals are fed to the control device (ST) and evaluated in accordance with the process, and that the processing steam (PD) is fed in a controlled way to the sinter chamber unit (SKV) via a valve (4) and via a processing steam pressure control device (6) by the control device (ST) in accordance with the process, by means of control signals (K4, K6).

**Revendications**

**1.** Procédé de moussage et frittage de matière synthétique, dans le cadre duquel une matière synthétique pouvant donner un produit mousse est prémoussée dans un agent moussant, par amenée de chaleur régulée, de sorte que sa densité ou sa granulométrie diminue ou augmente, et est entreposée, ensuite, à une température et une humidité de l'air prédéfinies pendant un temps déterminé, aux fins de séchage, d'absorption d'air et de dégagement de gaz propulseur, puis injectée, en cycles d'opération individuels, dans une chambre de frittage, qu'elle remplie, et dans laquelle chaleur et vapeur lui sont administrées au cours d'une phase de chauffage, la fin de l'admission de vapeur et la fin de la phase de chauffage et, partant de la, le début d'une phase de refroidissement Pk) étant déterminées, en dépendance de signaux de mesure, et la fin de la phase de refroidissement et le moment fixé pour le démoulage du corps fritté étant déterminés en dépendance de la pression et de la température, caractérisé par le fait que, pendant la phase de chauffage (Ph), une température de ramollissement (tw1, tw2) respective de la matière synthétique est déterminée à partir d'une marche de pression et/ou d'une allure de température (Pv1, Pv2; Tv1, Tv2) et que, partant de cette température de ramollissement (tw1, tw2), la fin la phase de chauffage (Ph) et de l'amenée de vapeur, ainsi que le début de la phase de refroidissement Pk) sont déterminés respectivement, et que , sur la base d'une température de frittage (ST1, ST2), règnant lors du point de ramollissement, le moment du démoulage (TE1,TE2) ou, de préférence, une température de démoulage maximale (ET1, ET2) et une pression de démoulage maxiamle (EP1, EP2) sont déterminés, le démoulage ayant alors lieu lorsque les valeurs maximales citées sont atteintes ou souspassées.

**2.** Procédé selon revendication 1, caractérisé par le fait que la température de ramollissement (tw1, tw2) est déterminée en ce que, partant de la marche de la pression (Pv1, Pv2), une vitesse d'accroissement de pression (DPS1, DPS2) respective est déterminée continuellement à intervalles de temps (Dt) relativement courts, par ex. 100 ms, et est comparée avec la vitesse d'accroissement de pression (DPS1) à un moment (ts) faisant suite à une aération de la chambre de frittage et que, ce faisant, il est vérifié si elle a diminué dans une certaine mesure, de préférence de 25%, la température de ramollissement (tw1, tw2) étant attribué dans ce cas, et la température alors respectivement mesurée est définie comme température de frittage (ST1, ST2), et la pression alors respectivement mesurée est définie comme pression de frittage (SP1, SP2)

**3.** Procédé selon revendication 1, caractérisé par le fait que la température de ramollissement (tw1, tw2) est déterminée en ce que, partant de l'allure de température (tv1, tv2), une vitesse d'accroissement de température (DTS1, DTS2) S2) respective est déterminée continuellement à intervalles de temps (Dt) relativement courts, et est comparée avec la vitesse d'accroissement de température (DTS1) moyenne, à partir du début de l'amenée de vapeur, après une aération de la chambre de frittage et que, ce faisant, il est vérifié si elle a diminué dans une certaine mesure, par ex. de 50%, la température de ramollissement (tw1, tw2) étant attribuée à cet évènement, et une température alors respectivement mesurée est définie comme température de frittage (ST1, ST2), et la pression alors respectivement mesurée est définie comme pression de frittage (SP1, SP2)

4. Procédé selon revendication 3, caractérisé par le fait que l'allure de température (Tv1, Tv2) d' une paroi de la chambre de frittage est exploitée pour la détermination de la température de ramollissement (tw1, tw2) et que la température de ramollissement (tw1, tw2) est attribuée au moment où la température est, brièvement, par ex. quelques 100 ms, augmente considérablement plus lentement qu'auparavant ou s'abaisse d'un écart de température prédéterminé, par ex. d'1 degré C, pour monter ensuite de nouveau plus rapidement.

5. Procédé selon revendication 3, caractérisé par le fait que l'allure de température (Tv1, Tv2) sur une paroi de la chambre de frittage est exploitée pour la détermination du point de ramollissement (tw1, tw2) et que le point de ramollissement (tw1, tw2) est attribué au moment où la température monte, brièvement, par ex. quelques 100 ms, considérablement plus lentement qu'auparavant ou s'abaisse d'un écart de température prédéterminé, par ex. de 1 degré C, pour monter ensuite de nouveau plus rapidement.

6. Procédé selon revendication 1, caractérisé par le fait que la fin de la phase de chauffage (Ph) et de l'amenée de vapeur est déterminée par allocation d'un temps d'arrêt (TH1, TH2, TH2b) de différente durée, de 4, 6 ou 8 secondes par exemple, prédéterminé, d'après la température de ramollissement (tw1, tw2), selon un standard de qualité prédéterminé, notamment un facteur de retardement.

7. Procédé selon revendication 1, caractérisé par le fait que le moment du démoulage (TE1,TE2) est choisi d'autant plus tard que la température de frittage (ST1, ST2) respectivement déterminée est plus basse, ou que la pression de démoulage maximale (EP1, EP2 est choisi d'autant plus basse que la température de frittage (ST1, ST2) est plus basse, et que la différence de température TU), entre la température de démoulage maximale (ET1, ET2) et la température de frittage (ST1, ST2) déterminée est choisie d'autant plus grande qu'une mesure admissible de post-gonflage et de retrait prédéfinie est plus faible et que la pièce moulée est d'autant plus épaisse ou que l'augmentation de température , constatée sur une pièce démoulée est plus élevée.

8. Procédé selon l'une des revendications précédentes, caractérisé par le fait que la vitesse d'accroissement de pression et/ou de température (DPS1, DPS1b), est comparée, respectivement, avec une vitesse d'accroissement prescrite et que, selon la divergence, lors d'accroissement de température ou de pression plus lent, une régulation du processus partiel de séchage a lieu de sorte qu'un séchage plus long ou plus intense, par exemple par élévation de la température, ait lieu et inversement.

9. Procédé selon l'une des revendications précédentes, caractérisé par le fait que la pression de frittage (SPx) est comparée avec une pression de frittage prescrite (SSP) prédéfinie et que, selon la divergence (AP) une régulation du processus partiel de prémoussage est effectué de sorte que, en cas de pression de frittage (SPx) plus élevée, le prémoussage est prolongé ou l'amenée de vapeur de moussage est augmentée et inversement.

10. Procédé selon revendication 9, caractérisé par le fait que la régulation du processus partiel de moussage est effectué de sorte que, selon la diveregence (AP) une mesure prescrite de granulométrie ou de densité (DS) est corrigée de sorte que, en cas de pression de frittage (SPx) plus élevée, la mesure prescrite de granulométrie est accrue ou la mesure prescrite de densité (DS) réduite et inversement.

11. Procédé selon l'une des revendications précédentes, caractérisé par le fait que la température de frittage (STx) est comparée avec une température de frittage prescrite (SST) prédéfinie et que, selon la divergence (As) une régulation du processus partiel d'entreposage est effectué de sorte que, en cas de température de frittage (STx) plus élevée, la température d''entreposage est augmentée ou le temps d'entreposage (tz) prolongé et inversement.

12. Procédé selon revendication 1, caractérisé par le fait qu' une teneur en humidité du corps fritté (FL) est respectivement mesuré et que, en dépendance d'une divergence positive de la valeur de mesure d'humidité d'une valeur prescrite prédéfinie, une pression de vapeur de frittage est augmentée adéquatement dans les cycles suivants et inversement.

13. Procédé selon revendication 1, caractérisé par le fait qu'une tension de pression (Q1, Q2, Q3) du corps fritté (FL) est mesuré et que, en dépendance d'une divergence positive de la valeur de mesure de la tension de pression d'une valeur prescrite de tensiopn de pression prédéfinie (q1, q2, q3), correspondant de préférence à une valeur de 90% d'une valeur de tension de pression max. accessible, le temps d'arrêt (TU, TH1) des cycles suivants est raccourci ou inversement.

14. Procédé selon revendication 1, caractérisé par le fait qu'un facteur de retardement du corps fritté (FL) est respectivement mesuré et que, en dépendance d'une divergence positive de la valeur prescrite du facteur de retardement prédéfinie, la pression de vapeur de frittage est réduite et/ou la température de démoulage est augmentée dans les cycles suivants ou inversement.

15. Procédé selon revendication 13 ou 14, caractérisé par le fait que la tension de pression et le facteur de retardement sont mesurés simultanément avec la température de surface du corps (FL) et que la valeur prescrite de tension de pression ou la valeur prescrite de facteur de retardement de la température ressort d'une table enregistrée, dans laquelle les relations sont mémorisés avec leurs attributions.

16. Procédé selon revendication 15, caractérisé par le fait qu'une augmentation de température de surfaces maximale est mesurée, respectivement, sur le corps (FL), après le démoulage de ce dernier, et qu'une réduction adéquate de la température de démoulage (ET5), déterminée à partir de la température de frittage (ST5), à une température de démoulage plus faible (ET5') est effectuée dans les cycles suivants.

17. Procédé selon revendications 8 à 16, caractérisé par le fait que les régulations ont lieu par augmentation ou réduction incrémentale, par cycle de frittage, des valeurs de commande influencée, par exemple: températures de moussage, de séchage, de frittage, de démoulage, temps de moussage, de séchage ou d'arrêt, ou de la valeur prescrite influencée, concernée, de sorte que les divergences (Ap, As) des valeurs prescrites, par exemple: vitesse d'accroissement de pression, température de frittage, pression de frittage, tension de pression mesureé ou facteur de retardement, se réduisent successivement.

18. Procédé selon revendication 8 à 17, caractérisé par le fait que les divergences (Ap, As) sont respectivement comparées avec une mesure limite supérieure et inférieure (Ago, Agu, Ago', Ag'), lors du dépassement desquelles un signal de perturbation est lancé et à la valeur correspondante desquelles la mesure de divergence, appliqué pour la régulation, est limité.

19. Dispositif pour l'exécution du procédé selon l'une des revendications 1 à 18, caractérisé par le fait qu'il consiste en un dispositif à chambre de frittage (SKV), contenant un avertisseur de pression (PM) et/ou un avertisseur de température (TM/ TCM), dont le signal de sortie est conduit à un dispositif de régulation (ST), qui, commandé par programme, selon le procédé, procède à une analyse et exploitation des signaux et lance des signaux de commande adéquats (K1, SZK, HK, EK, ZK), directement ou indirectement à un dispositif de régulation de vapeur de moussage (SD) et un dispositif de régulation du temps de chauffage (HV) ou un dispositif de régulation du temps d'entreposage (ZR) d'un dispositif d'entreposage (ZLV) et un dispositif de démoulage (ES) du dispositif à chambre de frittage (SKV).

20. Dispositif selon revendication 19, caractérisé par le fait qu'un dispositif de contrôle de qualité (QPV) est adjoint au, ou connecté en aval du dispositif à chambre de frittage (SKV), lequel dispositif de contrôle comprend une sonde de tension de pression et de facteur de retardement (DM), un avertisseur de température (TM1) et/ou un avertisseur d'humidité (FM), dont les signaux sont conduits au dispositif de régulation (ST) et évalués selon le procédé, et que la vapeur (PD) est amenée au dispositif à chambre de frittage (SKV) par l'intermédiaire d'une vanne (4) et un dispositif de régulation de la pression de la vapeur d'opération (6), par le dispositif de régulation (ST), commandée, conformément au procédé, par les signaux de commande (K4, K6).

Fig.1

Fig.2

Fig.3

Fig.4

Fig.5

Fig.6

Fig.7